# EUROPEAN PATENT APPLICATION

(11) **EP 3 379 128 A1**
(43) Date of publication of application: **26.09.2018**
(21) Application number: 18170207.7
(22) Date of filing: 09.07.2014
(51) Int. Cl.: F16L 37/091, F17C 13/04, F16K 1/30

(54) **DRAIN VALVE FOR A PRESSURISED FLUID TANK AND PRESSURISED FLUID TANK COMPRISING THE SAME**

(62) Divisional of application: 14176308.6
(71) Applicant: IVECO MAGIRUS AG, 89079 Ulm (DE)
(72) Inventor: GEH, Daniel, 89073 ULM (DE); POHL, Harald, 89155 ERBACH (DE)
(74) Representative: Fiume, Orazio

(57) **Abstract**

The invention relates to a drain valve for a pressurised fluid tank, comprising a valve body to be fitted into a bore of the pressurised fluid tank. This drain valve comprises a tooth ring fitted onto an outer circumferential surface of the valve body and comprising a plurality of elastically deformable teeth protruding from the valve body.

## Description

The present invention refers to a drain valve for a pressurised fluid tank according to the preamble of claim 1, and to a pressurised fluid tank comprising the same.

Pressurised fluid tanks like, for example, compressed air tanks of utility vehicles, can be equipped with drain valves.

For example, compressed air tanks that form a component of the compressed air circuit of utility vehicles are equipped with drain valves that allow a removal of undesired liquid that collects at the bottom of the compressed air tank. The drain valve as such may comprise a simple mechanism for operating the valve manually by pressing or tilting a valve element, so that the valve opens and the liquid can flow out. In the pressurised state of the compressed air tank, the drain valve is held in its closed position by the inner pressure of the compressed air tank.

Usually the drain valve is fitted into a bore of the pressurised fluid tank by means of a screw mechanism, comprising an external screw thread on the outer circumferential surface of the valve body that can be screwed into a corresponding internal screw thread, i.e. a female screw thread within the bore of the pressurised fluid tank. Even though the installation of the drain valve is simple, installation mistakes can happen easily. For example, if the torque for tightening the drain valve within the bore is too high, the screw thread is damaged. Another common mistake is to fit the external and internal screw threads not properly by inclining the main axis of the valve body with respect to the predetermined turning axis of the screw threads. If the drain valve is screwed in this position, at least one of the screw threads is damaged easily. Both mistakes lead to an improper fitting of the drain valve within the bore, causing undesired leakage of a pressurised air tank in operation or to difficulties to remove the drain valve, if necessary. Another disadvantage of the common drain valves lies in increased manufacturing costs because of the provision of the external screw thread on the drain valve and the internal screw thread within the bore of the pressurized fluid tank. The overall weight of the common drain valves is relatively high.

It is therefore an object of the present invention to provide a drain valve of the above kind that can be installed simply with a decreased risk of installation mistakes. Another object is to provide such a drain valve that can be manufactured at low costs to be installed without further machining of the bore of the pressurized fluid tank.

These objects are achieved by a drain valve comprising the features of claim 1.

The drain valve according to the present invention comprises a tooth ring that is fitted onto an outer circumferential surface of the valve body. This tooth ring comprises a plurality of elastically deformable teeth that protrude outwardly from the valve body. For example, the tooth ring can be made of stainless spring steel providing the desired elasticity of the teeth.

If the valve body is pushed into the bore, the ends of the teeth of the tooth ring contact the inner surface of the bore so that they are slightly deflected against the insertion direction of the valve body. Because of this deflection, the valve body can be further inserted into the bore to reach its final installation position, with the teeth further sliding on the inner surface of the bore. However, when the valve body is pressurized from the inner portion of the pressurized fluid tank to be moved against this insertion direction, the valve body is fixed in its installation position by the deformed teeth that engage the inner surface of the bore with a strong grip. With other words, the teeth of the tooth ring enable an easy sliding of the valve body in the insertion direction while preventing a reverse movement in the opposite direction.

Hence an installation of the drain valve can be performed simply by pushing the valve body into the bore of the pressurized fluid tank. No further installation operation is necessary. With the drain valve being installed, the tank can be pressurized. The inner pressure of the tank does not urge the valve body out of the bore but rather contributes to a tight fit of the valve body within the bore. Because of this fact, the tooth ring provides a self-fitting engagement of the drain valve within the bore.

With the drain valve according to the present invention, it is not necessary to provide an external screw thread on the outer circumferential surface of the valve body, nor to provide an inner screw thread on the surface of the bore. No further machining of the bore of the pressurized fluid tank is necessary to prepare the installation of the drain valve. The tooth ring is an element that can be manufactured easily and can be fitted onto the outer surface of the valve body in a simple pre-installation step. This drain valve can be manufactured at lower costs, and its overall weight is decreased.

Any possible installation mistakes that have been described above with respect to a screw fitting engagement are prevented by the provision of the tooth ring of the drain valve according to the present invention. This drain valve can be securely installed even with relatively low diligence.

According to a preferred embodiment of the present invention, the teeth are inclined against the insertion direction of the valve body. By this inclination, the insertion of the tooth ring in the bore is simplified.

Preferably the drain valve according to the present invention comprises a ring-shaped step portion disposed behind the tooth ring with respect to the insertion direction of a valve body. This ring-shaped step portion supports the teeth of a tooth ring from behind when they are deformed and deflected by the pressure contact of the bore.

According to another preferred embodiment of the present invention, the drain valve comprises a support ring disposed in front of the tooth ring with respect to the insertion direction of the valve body. This support ring provides a tight fit of the tooth ring on the outer circumferential surface of the valve body.

More preferably, the drain valve comprises at least one seal ring disposed in front of or behind the tooth ring. This or these seal rings provide a fluid tight fit of the drain valve within the bore to prevent an undesired leakage of the content of the pressurized fluid tank.

The invention is further related to a pressurized fluid tank, comprising a drain valve as described above.

According to one preferred embodiment, this pressurised fluid tank is a compressed air tank of a utility vehicle.

These and other aspects of the invention will be apparent from and elucidated with reference to a preferred embodiment of the invention described hereinafter.
Fig. 1 is partial section along the main axis of one embodiment of a drain valve according to the present invention, together with a bore of a pressurized fluid tank to receive the drain valve; and
Fig. 2 shows the drain valve and the reception bore of Fig. 1 in a state in which the valve body is inserted into the bore.

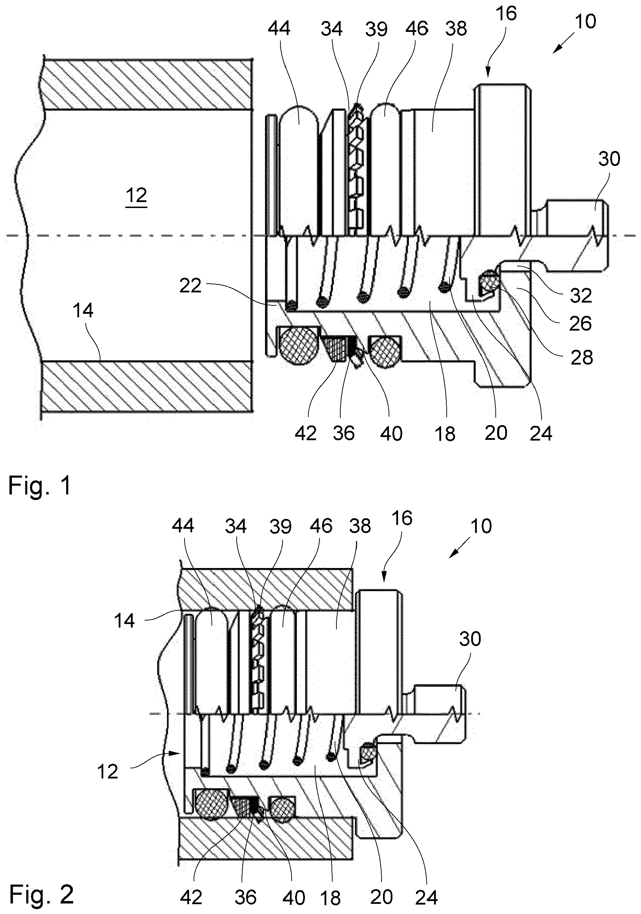

Fig. 1 shows a drain valve 10 for a pressurized fluid tank that is not shown in further detail in the figures. In the present embodiment, the pressurized fluid tank is a compressed air tank of a utility vehicle. In the left part of Fig. 1, a bore 12 is shown as a reception bore of this pressurised fluid tank. The orientation in the figures is such that the inner portion of the pressurised fluid tank is to be located on the left side, while the right portion of Fig. 1, in which the drain valve 10 is positioned in a state before being inserted into the bore 12, represents the outer environmental space around the pressurised fluid tank. The bore 12 is a cylindrical bore with a smooth inner wall 14 that has a constant cross section over its complete length in the axial direction. The insertion direction of the drain valve 10 is marked by an arrow A in the upper portion of Fig. 1.

In the following, the construction of the drain valve 10 shall be described.

The drain valve 10 comprises a valve body 16 with a cylindrical hollow space 18 for receiving a coil spring 20 that is supported by an inner step portion 22 at the insertion end that is directed towards the bore 12. At the opposite end of the drain valve 10, a valve element 24 contacts the corresponding end of the coil spring 20 inside the space 18 to be pushed into the direction opposite to the insertion direction A.

The valve element 24 is shaped such that it contacts another step portion 26 inside the valve body 16 opposite to the step portion 22, and by this contact via a seal ring 28, the drain valve 10 is closed. A free outer end of the valve element 24 is formed as a central pin 30 protruding out of an opening 32 provided in the outer end of the valve body 16. By pressing this pin 30 manually in the insertion direction A of the drain valve 10, the valve element 24 is pushed against the spring force of the coil spring 20 into the hollow space 18, and the inner portion of the valve element 24 releases from the step portion 26 to open the space 18 via the opening 32 towards the outer environmental space of the drain valve 10. With other words, pressing or tilting the pin 30 opens the drain valve 10 against the spring force of the coil spring 20 so that a fluid inside the pressurised fluid tank can leak out. In the present embodiment, the drain valve 10 is received within a bore 12 in the lower portion of a compressed air tank to drain liquid that is collected at the bottom portion of the compressed air tank.

Reference is now made to a fitting arrangement of a drain valve 10 within the reception bore 12 of the pressurized fluid tank. As it is shown in the upper portion of Fig. 1, a tooth ring 34 is fitted within an annular reception grove 36 formed in the outer circumferential surface 38 of the valve body 16. This tooth ring 34 comprises a plurality of teeth generally denoted by reference number 39 that are elastically deformable and protrude from the valve body 16, i.e. they have at least an extension component standing vertical to the insertion direction A of the drain valve 10. In the present embodiment, the outer circumferential surface 38 of the valve body 16 has a generally cylindrical shape to be received by the bore 12 which has a corresponding shape and diameter, and the teeth 39 extend radially from the valve body 16. However, additional to this radial component of extension, the teeth 39 are inclined against the insertion direction A of the valve body 16, so that they do not stand exactly vertical to the main axis B of the valve body 16 but have a slight inclination away from the bore 12 in Fig. 1. Generally speaking, the tooth ring 34 is crown-shaped and can be formed of stainless spring steel to have a desired elasticity of teeth 39. The drain valve 10 further comprises a ring-shaped step portion 40 disposed behind a tooth ring 34 with respect to the insertion direction A of the valve body 16. In the present description and in the claims, the terms "front" and "behind" shall generally refer to the insertion direction A, such that if the drain valve 10 is inserted, an element designated as a front element will be inserted in the bore 12 first, followed by an element that is disposed behind it. The ring-shaped step portion 40 is formed integrally as an annular portion of the outer circumferential surface 38 of the valve body 16 so that the teeth 39, which are inclined in the direction of the ring-shaped step portion 40 can be supported by the ring shaped step portion 40 when pressed together by an outer force against the circumferential surface 38 of the valve body 16.

Moreover, the drain valve 10 comprises a support ring 42 disposed in front of the tooth ring 34 with respect to the insertion direction A of the valve body 16, i.e. the support ring 42 is disposed on the opposite side of the ring shaped step portion 40 with respect to the tooth ring 34 to be inserted first. Unlike the ring-shaped step portion 40, the support ring 42 is formed as an additional member to be fixed on the outer circumferential surface 38 of the valve body 16. To provide the leak tightness of the outer fitting of the valve body 16 within the reception bore 12, two seal rings 44, 46 are provided in respective annular groves 48, 50 on the outer circumferential surface 38 of the valve body 16. A first seal ring 44 is disposed in front of the support ring 42 with respect to the insertion direction A of the valve body, while a second seal ring 46 is disposed behind the ring shaped step portion 40. The outer diameter of these seal rings 44, 46 is slightly greater than the inner diameter of the inner surface 14 of the bore 12. These seal rings 44, 46 are formed of a compressible elastic material like, for example, rubber or a suitable plastic material to provide the desired compressibility and seal tightness.

For fitting the drain valve 10 into the reception bore 12, the valve body 10 is moved from the position shown in Fig. 1 in the insertion direction A so that the first seal ring 44 contacts the inner surface 14 of the bore 12 to be compressed. With the further insertion movement, the outer ends of the teeth 39 of the tooth ring 34 contact the inner surface 14 of the bore 12. Because the outer diameter of the tooth ring 34 is slightly greater than the inner diameter of the surface 14 of the bore 12, the teeth 39 will be further deformed and slightly compressed elastically against the support of the ring-shaped step portion 40. In this compressed state, the valve body 16 can be further inserted so that also the second seal ring 46 can be compressed and slide into the bore 12, until the position in Fig. 2 is reached, in which the drain valve 10 is fully inserted into the bore 12.

In this position in Fig. 2, the valve body 16 is fixed within the bore 12 by the engagement of the teeth 39 of the tooth ring 34 with the inner surface 14 of the bore 12. Because of their elasticity, the compressed teeth 39 are biased radially outward because of their restoring force. If a force from the inside of the pressurised fluid tank acts to push the drain valve 10 out of the bore 12 against the insertion direction A, this force will cause an even tighter engaging grip of the teeth 39 into the inner surface 14 of the bore 12. In this way, the tooth ring 34 provides a self-fitting arrangement of the drain valve 10 within the bore 12. This means that the drain valve 10 can be fixed within the bore 12 by simply pushing it into the bore 12 from the position in Fig. 1 to the end position in Fig. 2. No further fixing means or tools are necessary for this installation, and it can be carried out by a very simple operation without the risk of installation mistakes.

The self fitting arrangement described above is promoted by the inner operation pressure of a pressurised fluid tank, because this pressure tends to push out the drain valve 10 against the insertion direction A.

It can be further taken from the above description that the installation can be performed with a relatively smooth inner surface 14 of the reception bore 12, so that no further machining of this inner surface 14 is necessary. The drain valve 10 according to the present invention can be inserted into any cylindrical bores 12 with a circular cross section, provided in a wall of a pressurised fluid tank that is made of a material such as steel, aluminium, glass fiber, carbon fiber, composite plastic or another desired material.

## Claims

1. Drain valve (10) for a pressurized fluid tank, comprising a valve body (16) to be fitted into a bore (12) of the pressurized fluid tank, **characterized by** a tooth ring (36) fitted onto an outer circumferential surface (38) of the valve body (16) and comprising a plurality of elastically deformable teeth (39) protruding from the valve body (16).

2. Drain valve according to claim 1, **characterized in that** the teeth (39) are inclined against the insertion direction (A) of the valve body (16).

3. Drain valve according to claim 1 or 2, **characterized by** a ring-shaped step portion (40) disposed behind the tooth ring (36) with respect to the insertion direction of the valve body (16).

4. Drain valve according to one of claims 1 to 3, **characterized by** a support ring (42) disposed in front of the tooth ring (36) with respect to the insertion direction of the valve body (16).

5. Drain valve according to one of claims 1 to 4, **characterized by** at least one seal ring (44, 46) disposed in front of or behind the tooth ring (36).

6. Pressurized fluid tank, comprising a drain valve (10) according to one of the preceding claims.

7. Pressurized fluid tank according to claim 6, **characterized in that** the pressurized fluid tank is a compressed air tank of a utility vehicle.
